Europäisches Patentamt

European Patent Office

Office européen des brevets

(19)

(11) **EP 1 027 290 B1**

(12) **FASCICULE DE BREVET EUROPEEN**

(45) Date de publication et mention
de la délivrance du brevet:
**10.04.2002 Bulletin 2002/15**

(51) Int Cl.⁷: **C02F 1/52**, B01D 21/00

(21) Numéro de dépôt: **98947614.8**

(22) Date de dépôt: **06.10.1998**

(86) Numéro de dépôt international:
**PCT/FR98/02135**

(87) Numéro de publication internationale:
**WO 99/19261 (22.04.1999 Gazette 1999/16)**

(54) **PROCEDE DE TRAITEMENT PAR VOIE PHYSICO-CHIMIQUE DES EAUX ET INSTALLATION POUR LA MISE EN OEUVRE D'UN TEL PROCEDE**

VERFAHREN ZUR PHYSICO-CHEMISCHEN BEHANDLUNG VON WASSER UND EINRICHTUNG DAFÜR

METHOD FOR PHYSICO-CHEMICAL TREATMENT OF WATER AND PLANT FOR IMPLEMENTING SAME

(84) Etats contractants désignés:
**BE DK GB IT**

(30) Priorité: **14.10.1997 FR 9713077**
**10.11.1997 FR 9714337**

(43) Date de publication de la demande:
**16.08.2000 Bulletin 2000/33**

(73) Titulaire: **OTV Omnium de Traitements et de Valorisation S.A.**
**94417 St Maurice Cédex (FR)**

(72) Inventeurs:
• **LE PODER, Nicolas**
**F-78700 Conflans-Sainte-Honorine (FR)**

• **HAEGEL, Didier**
**F-94350 Villiers sur Marne (FR)**

(74) Mandataire: **Vidon, Patrice**
**Cabinet Patrice Vidon**
**Le Nobel (Bât. A)**
**Technopôle Atalante**
**2, allée Antoine Becquerel**
**BP 90333**
**35703 Rennes Cedex 7 (FR)**

(56) Documents cités:
DE-A- 3 700 725          US-A- 3 797 668
US-A- 4 142 970

**Description**

L'invention concerne le domaine du traitement des eaux en vue de leur épuration ou de leur potabilisation, telles que notamment, mais non exclusivement les eaux usées urbaines ou industrielles ainsi que les eaux de temps de pluie.

Il est connu dans l'état de l'art diverses techniques de traitement d'eau par voie physico-chimique mettant en oeuvre différents types de décanteurs qui, selon notamment leur architecture et leur dimensionnement, permettent d'atteindre des vitesses hydrauliques de traitement plus ou moins élevées.

Alors que les décanteurs simples ne permettent guère de dépasser des vitesses de 2,5 m/h, ces vitesses atteignent 10 à 15 m/h lorsque les décanteurs utilisés présentent une structure interne intégrant des éléments lamellaires. De tels décanteurs lamellaires sont notamment commercialisées par la Demanderesse sous la dénomination MULTIFLO (marque déposée). Lorsque, de surcroît, l'étape de décantation proprement dite est précédée d'une étape de coagulation-flocculation, il est possible d'atteindre des vitesses de l'ordre de 30 m/h, voire 80 m/h lorsqu'une étape de recirculation de boues est mise en oeuvre. Une technique encore plus perfectionnée, mise au point par la Demanderesse et commercialisée sous la marque ACTIFLO (marque déposée) consiste à mettre en oeuvre des décanteurs à flocs lestés par un matériau de lestage adéquat, principalement du microsable. Un telle technique est décrite en détails dans les brevets FR 2627704 et FR 2719734 délivrés à la Demanderesse. Un tel lestage des flocs formés dans les décanteurs permet d'atteindre des vitesses de traitement de 50 m/h et jusqu'à 200 m/h.

Les décanteurs du type décrits ci-dessus donnent des boues non épaissies. La concentration des boues en sortie de décanteurs à flocs lestés à l'aide d'un matériau granulaire varie ainsi usuellement entre 0,5 g/l et 20 g/l de matières sèches (MS). Ces boues doivent donc être épaissies grâce à des épaississeurs pour atteindre une concentration de 20 à 250 g/l de MS (correspondant à un taux de siccité de 2 à 25 %), préférentiellement une concentration de 20 à 90 g/l de MS (correspondant à un taux de siccité de 3 à 9%).

Dans le cadre de la technique ACTIFLO décrite ci-dessus, un épaississeur est prévu pour récupérer les boues du décanteur, et les eaux de surverse des épaississeurs sont renvoyées en tête du décanteur. Ce retour en tête des eaux de surverse d'épaississeur augmente le débit d'eau à traiter entrant dans l'installation ("influent").

Dans d'autres décanteurs de l'état de la technique, la fonction d'épaississement des boues est intégrée dans les décanteurs eux-mêmes. Ces décanteurs sont alors classiquement dénommés "décanteurs épaississeurs". On peut citer à cet égard la technique également mise au point par la Demanderesse et commercialisée sous la dénomination MULTIFLO E ou EF ou encore d'autres techniques décrites dans le document de brevets FR2156277. Des techniques analogues mettent également en oeuvre une recirculation des boues (US4388195, FR2553082). Ces décanteurs épaississeurs permettent l'obtention de vitesses hydrauliques de traitement de l'ordre de 30 à 50 m/h voire dans certains cas 80 m/h pour l'obtention de boues présentant une siccité pouvant varier de 2 à 25 %, en moyenne de 3 à 8 % (correspondant à 30 à 80 g/l de matières sèches). Toutefois, ils n'autorisent pas l'obtention de vitesses aussi importantes que celles pouvant être obtenues avec les décanteurs à flocs lestés.

En ce qui concerne la technique des épaississeurs, les épaississeurs statiques sont dimensionnés par rapport à une charge au radier correspondant au flux massique maximal de matières sèches admissible par unité de surface. Classiquement cette charge au radier se situe entre 20 et 100 kg/MS/m$^2$/j. Un épaississeur lamellaire précédé d'une étape de floculation de boues non épaissies permet d'atteindre des charges au radier comprises entre 500 et 3000 kg MS/m$^2$/j, parfois davantage.

L'objectif principal de la présente invention est de proposer un procédé permettant à la fois de bénéficier des avantages respectifs des décanteurs à flocs lestés à l'aide d'un matériau granulaire qui peuvent fonctionner à de très grandes vitesses hydrauliques (jusqu'à 200 m/h comme indiqué ci-dessus), et ceux des décanteurs épaississeurs lamellaires qui assurent une très bonne fonction d'épaississement des boues mais qui ne permettent pas l'obtention de vitesses hydrauliques aussi élevées que celles autorisées par les décanteurs à flocs lestés.

Un autre objectif de la présente invention est de décrire un tel procédé qui permette d'utiliser des décanteurs présentant des surfaces de radiers inférieures aux surfaces qui devraient être classiquement mises en oeuvre selon l'état de la techniques pour des vitesses de traitement hydraulique et des siccités de boues optimisées, et donc de diminuer le dimensionnement des installations correspondantes pour la mise en oeuvre d'un tel procédé.

Encore un autre objectif de la présente invention est de divulguer un tel procédé qui permette de s'affranchir de la nécessiter de renvoyer les eaux de surverses des épaississeurs en tête d'installation.

Egalement un objectif de la présente invention est de proposer un procédé qui puisse permettre un traitement efficace des eaux lors d'augmentations, mêmes brusques, du débit ou de la charge massique des eaux à traiter, survenant par exemples lors d'épisodes de temps de pluies.

Ces différents objectifs sont atteints grâce à l'invention qui concerne un procédé de traitement par voie physico-chimique des eaux caractérisé en ce qu'il comprend au moins une étape consistant à faire transiter les eaux à traiter dans au moins un décanteur du type donnant des boues non épaissies et dans au moins un décanteur-épaississeur, ledit décanteur-épaississeur traitant les boues des deux décanteurs et une partie des eaux à traiter.

L'originalité du procédé selon la présente invention consiste donc essentiellement dans la caractéristique selon laquelle le décanteur-épaississeur n'est pas utilisé pour traiter uniquement les boues provenant d'un décanteur donnant des boues épaissies mais aussi pour traiter une partie des eaux elles-mêmes (influent). Comme il sera explicité ci-après plus en détails, il est ainsi possible de diminuer le dimensionnent des installations puisque la fonction décanteur du décanteur-épaississeur permet d'augmenter la surface de décantation disponible pour traiter l'influent.

Selon une variante particulièrement intéressante de l'invention, ledit décanteur du type donnant des boues non épaissies est un décanteur à flocs lestés par au moins un matériau granulaire, préférentiellement un microsable, et ledit décanteur-épaississeur est un décanteur-épaississeur lamellaire. Bien que l'on pourra envisager d'utiliser tout type de matériau granulaire connu de l'homme de l'art, celui-ci sera préférentiellement constitué par du micro-sable.

L'invention permet ainsi de cumuler les avantages respectifs des décanteurs à flocs lestés par un matériau granulaire, qui peuvent fonctionner à de très grandes vitesses hydrauliques (jusqu'à 200 m/h comme cité ci-dessus), et les avantages des décanteurs-épaississeurs lamellaires qui assurent une très bonne fonction d'épaississement des boues. On pourra ainsi, dans une telle variante préférentielle de l'invention, utiliser les décanteurs à flocs lestés ACTIFLO et les décanteurs épaississeurs MULTIFLO E ou EF commercialisés par la Demanderesse et décrits ci-dessus. Dans le cadre d'une telle variante préférentielle, on notera que les boues provenant d'un tel décanteur à flocs lestés par un matériau granulaire épaississent très bien et ne provoquent pas de perturbation au niveau du décanteur-épaississeur. Il suffit en effet pour ce faire de diminuer le débit d'eau traitée sur cet ouvrage au profit du débit d'eau traitée sur le décanteur à flocs lestés par le matériau granulaire.

Le dimensionnement d'un décanteur épaississeur fait intervenir deux paramètres, la vitesse hydraulique pour la décantation et la charge massique au radier pour l'épaississement. C'est généralement la vitesse hydraulique qui est limitante. Grâce au procédé selon l'invention, le renvoi des boues non épaissies en provenance du décanteur lamellaire à flocs lestés par le matériau granulaire, la concentration des boues dans le décanteur-épaississeur augmente de façon telle qu'il est possible d'augmenter la vitesse hydraulique maximale admissible et ainsi d'utiliser une vitesse hydraulique maximale correspondante à celle de la charge massique au radier. Selon le procédé de l'invention, le décanteur-épaississeur est donc dimensionné en fonction de la charge au radier maximale admissible et le décanteur à flocs lestés est dimensionné sur le complément non admissible hydrauliquement par le décanteur-épaississeur.

Selon un autre mode de réalisation de l'invention, le décanteur-épaississeur lamellaire utilisé peut aussi être un décanteur-épaississeur lamellaire à recirculation de boues. Dans ce cas, le procédé selon l'invention comprend avantageusement une étape consistant à mélanger lesdites boues non épaissies provenant du décanteur du type donnant des boues non épaissies aux boues recirculées du décanteur-épaississeur lamellaire à recirculation de boues.

Selon une variante de l'invention, le procédé consiste à faire transiter l'eau à traiter dans ledit décanteur du type donnant des boues non épaissies puis dans ledit décanteur-épaississeur, lesdits décanteurs étant alors montés en série.

Selon une autre variante, il consiste à alimenter en parallèle ledit décanteur du type donnnant des boues non épaissies et ledit décanteur-épaississeur.

De telles variantes du procédé seront utilisées pour adapter celui-ci aux conditions de sa mise en oeuvre et notamment pour permettre son adaptation aux variations de débit de charges ou de flux des eaux à traiter.

Selon un autre aspect intéressant de l'invention, le procédé comprend une étape supplémentaire consistant à ajouter au moins un réactif permettant d'améliorer la décantation et l'épaississement des boues dans ledit décanteur-épaississeur. Ce réactif pourra être ajouté au fil de l'eau c'est-à-dire en amenant ledit réactif directement dans le courant d'amenée d'eau à traiter ou bien au cours d'une étape de coagulation-floculation intégrée mise en oeuvre en amont dudit décanteur-épaississeur ou intégrée dans celui-ci. Il pourra avantageusement être envisagé dans ce cadre de mettre en oeuvre le procédé de coagulation prolongée ECOFLOC mis au point par la demanderesse et décrit dans le brevet français FR2631021.

Les principaux avantages de la présente invention consistant en l'utilisation combinée d'un décanteur du type donnant des boues non épaissies (préférentiellement un décanteur à flocs lestés par au moins un matériau granulaire) et d'un décanteur-épaississeur (préférentiellement lamellaire avec ou sans recirculation de boues) sont les suivants.

Le procédé selon l'invention est plus compétitif que les procédés de l'état de la technique mentionnés en préambule (décanteur + épaississeur ou décanteur à épaississeur intégré) notamment par le fait qu'il permet de réduire les dimensions des installations nécessaires à sa mise en oeuvre.

La présente invention permet de supprimer les retours en tête d'installation des surverses d'épaississeurs qui doivent être mis en oeuvre lorsque l'on utilise seuls des décanteurs couplés à un épaississeur de boues.

Par ailleurs, l'obtention de boues non épaissies mais pré-floculées en provenance du décanteur à flocs lestés injectées dans le décanteur-épaississeur permet :

- d'obtenir une concentration accrue en MES (matières en suspension) à l'entrée du décanteur-épaississeur, ce qui autorise des vitesses de traitement hydraulique optimisées au sein de celui-ci ;
- d'obtenir des boues présentant un taux de siccité plus élevé ;

- le cas échéant de réduire le débit de boues recirculées, lorsqu'on choisira d'utiliser un décanteur épaississeur à recirculation de boues ;
- le cas échéant de réduire les taux de réactifs utilisés dans le décanteur-épaississeur ;
- d'accroître la charge au radier du décanteur-épaississeur (du fait du mélange des boues, celles-ci épaississent plus rapidement ce qui permet d'augmenter et donc d'améliorer la charge au radier de la partie épaississeur du décanteur-épaississeur) tout en conservant une eau de qualité conforme à celle requise;
- d'intégrer facilement les variations des flux polluants à traiter ;
- d'adapter le procédé pour traiter les débits et flux de temps sec et de temps de pluie.

L'invention concerne également toute installation pour la mise en oeuvre du procédé tel que décrit ci-dessus caractérisée en ce qu'elle comprend des moyens d'amenée des eaux à traiter, au moins un décanteur du type donnant des boues non épaissies, au moins un décanteur-épaississeur, des moyens d'acheminement d'au moins une partie des boues non épaissies provenant du décanteur du type donnant des boues non épaissies vers le décanteur-épaississeur, des moyens d'évacuation des eaux traitées provenant dudit décanteur du type donnant des boues non épaissies et dudit décanteur-épaississeur et des moyens d'évacuation des boues épaissies provenant dudit décanteur-épaississeur.

Une telle installation pourra le cas échéant être précédée par des moyens de prétraitement classiques des eaux à traitées (dégrillage, déssablage, dégraissage par exemple ou simplement un dégrillage). Les boues provenant des moyens d'évacuation des boues épaissies pourront être acheminées, également de façon classique, vers des moyens de traitement de ces boues. Enfin, les eaux traitées sortant de l'installation pourront ensuite subir un post-traitement.

D'une façon préférentielle, lesdits moyens d'amenée des eaux à traiter de l'installation selon l'invention permettent d'alimenter ledit décanteur du type donnant des boues non épaissies et ledit décanteur-épaississeur, soit en série soit en parallèle. Une telle installation pourra ainsi être facilement configurée pour s'adapter aux variations de charge et/ou de débit de l'influent. Une telle caractéristique pourra également être mise à profit lors du démarrage de l'installation.

Préférentiellement, ledit décanteur du type donnant des boues non épaissies est un décanteur lamellaire à flocs lestés par au moins un matériau granulaire (tel que par exemple un décanteur ACTIFLO commercialisé par la Demanderesse).

Egalement préférentiellement, ledit décanteur-épaississeur est un décanteur-épaississeur lamellaire ou un décanteur-épaississeur lamellaire à recirculation de boues.

Avantageusement, l'installation comprend aussi des moyens d'addition d'au moins un réactif coagulant ou floculant dans ledit décanteur-épaississeur.

L'invention couvre également des procédés d'utilisation d'une telle installation.

L'invention couvre notamment un tel procédé qui consiste à alimenter en série ledit décanteur du type donnant des boues non épaissies et ledit décanteur-épaississeur lors de la mise en route de l'installation et à alimenter en parallèle lesdits décanteurs une fois l'installation mise en route.

L'invention couvre également un procédé qui consiste à alimenter en série ledit décanteur du type donnant des boues non épaissies et ledit décanteur-épaississeur lorsque ladite installation reçoit un débit et/ou un flux normal d'eaux à traiter et en ce qu'il consiste à alimenter en parallèle lesdits décanteurs lors des pointes hydrauliques ou massiques.

L'invention, ainsi que les différents avantages qu'elle présente, seront plus facilement compris grâce à la description qui va suivre, de plusieurs modes non limitatifs de réalisation de celles-ci, en référence aux dessins, dans lesquels :

- les figures 1 et 2 représentent schématiquement différentes installations mettant en oeuvre des procédés de traitement physico-chimique de l'état de l'art ;
- la figure 3 représente un premier mode de réalisation d'une installation mettant en oeuvre le procédé selon l'invention ;
- les figures 4 à 8 représentent un second mode de réalisation d'une installation mettant en oeuvre le procédé selon l'invention selon plusieurs configurations de fonctionnement ;
- les figure 9 et 10 représentent un troisième mode de réalisation d'une installation mettant en oeuvre le procédé selon l'invention selon plusieurs configurations de fonctionnement.

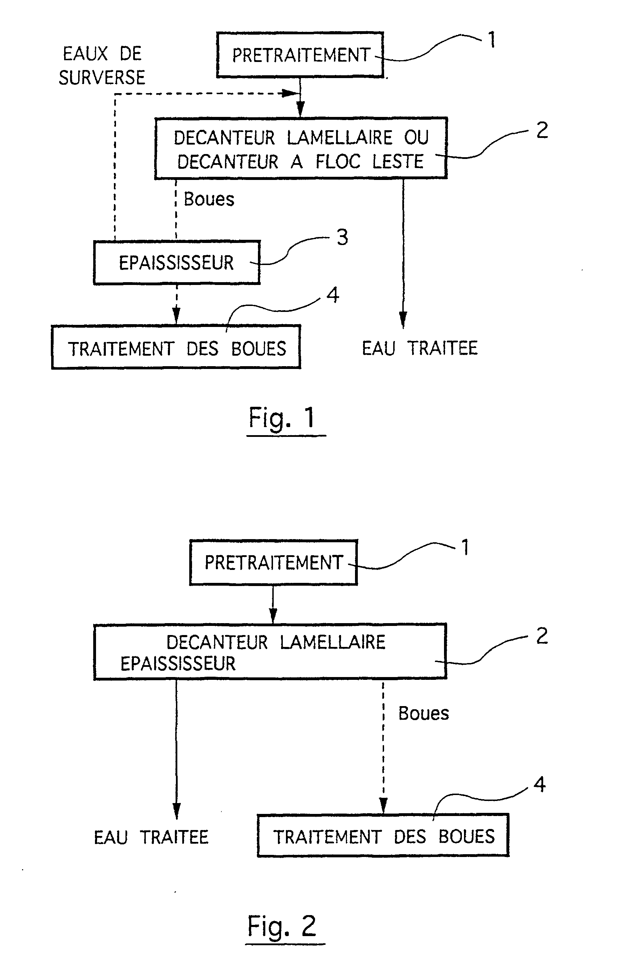

En référence à la figure 1, une première installation de traitement physico-chimiques des eaux selon un premier état de la technique est représentée. Cette installation inclut une unité de prétraitement 1 (pouvant être simplement un dégrillage), un décanteur du type donnant des boues non épaissies 2 (par exemple un décanteur lamellaire MULTIFLO ou un décanteur à flocs lestés ACTIFLO), d'où sont extraits d'une part des boues non épaissies et de l'eau traitée. Les boues non épaissies sont dirigées vers un épaississeur 3 pour augmenter leur taux de siccité. Ces boues épaissies sont ensuite envoyées vers une unité de traitement de boues 4. Les eaux de surverse provenant de l'épaississeur 3 sont réacheminées en tête du décanteur 2 . Le type de décanteur décrit dans cet art antérieur permet d'utiliser des vitesses de traitement élevées mais nécessite l'utilisation d'un épaississeur annexe et impliquent donc l'utilisation d'installations de dimensions élevées.

En référence à la figure 2, une seconde installation de traitement physico-chimiques des eaux selon un second état de la technique est représentée. Cette installation inclut une unité de prétraitement 1 (pouvant être simplement un dégrillage), un décanteur-épaississeur lamellaire 5 (par exemple un décanteur-épaississeur lamellaire MULTIFLO E ou EF) à la sortie duquel on obtient directement des boues épaissies et de l'eau traitée, les boues épaissies étant ensuite acheminées vers une unité de traitement de boues 4. (On notera que le décanteur-épaississeur lamellaire peut aussi être constitué par un décanteur lamellaire à recirculation de boues).

Les décanteurs-épaississeurs selon ce second état de la technique permettent d'obtenir des boues présentant un taux élevé de siccité mais ne permettent pas d'atteindre les vitesses de traitement autorisées par le premier état de la technique.

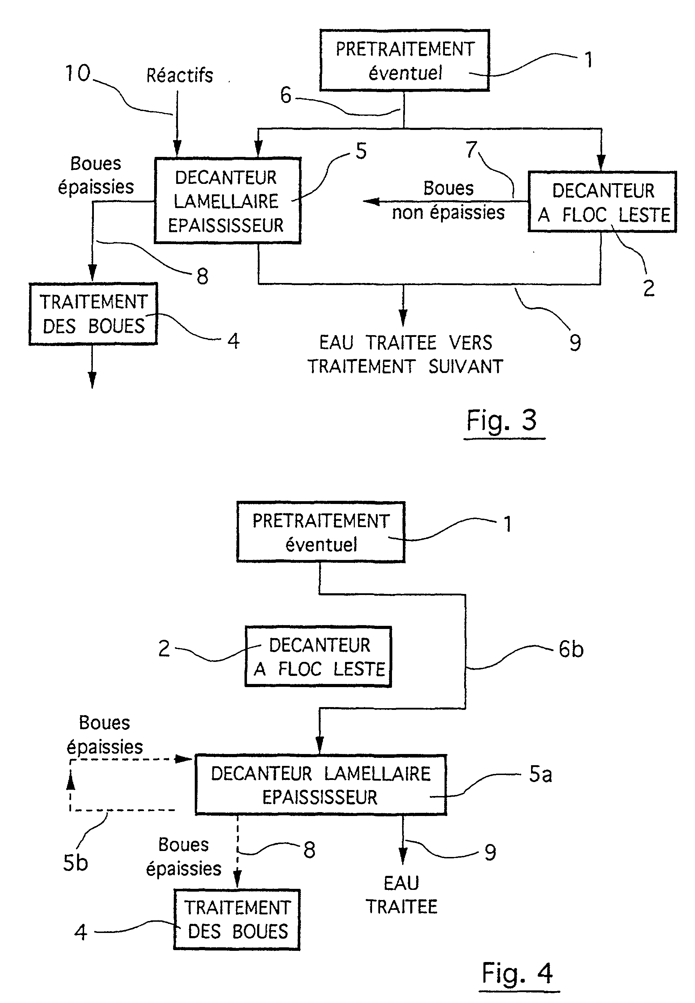

Selon l'invention, une installation mettant en oeuvre le procédé selon l'invention est représentée en figure 3.

Cette installation inclut des moyens de prétraitement 1, un décanteur du type donnant des boues non épaissies constitué par un décanteur à flocs lestés 2, un décanteur-épaississeur lamellaire 5, des moyens d'amenée 6 des eaux à traiter à la fois dans le décanteur à flocs lestés 2 et dans le décanteur-épaississeur lamellaire 5, des moyens d'acheminement 7 des boues non épaissies provenant du décanteur à flocs lestés 2 dans le décanteur-épaississeur 5, des moyens d'évacuation des eaux traitées 9 provenant des deux décanteurs 2,5 et des moyens d'évacuation 8 des boues épaissies provenant du décanteur-épaississeur 5 vers une unité de traitement de boues 4. L'installation comprend par ailleurs des moyens d'addition 10 d'au moins un réactif dans le décanteur-épaississeur.

On détaille ci-après un exemple comparatif de dimensionnements entre une installation selon l'état de la technique du type de celle représentée à la figure 2 et une installation selon l'invention du type de celle représentée à la figure 3.

Cet exemple comparatif a été effectué avec les données de base suivantes :

Flux massique maximal journalier à traiter dans l'installation : 120000 kg MS/j
Débit maximal des eaux à traiter : 10 000 m$^3$/h
Charge au radier maximale admissible sur l'épaississeur : 2000 kg/m$^2$/j

Pour une installation selon l'art antérieur du type de celle représentée à la figure 2 avec une vitesse maximale (au radier) de traitement de 40 m/h, la surface au radier nécessaire corespond à la plus grande des surfaces calculées ci-après :

$$10\ 000\ \text{m}^3/\text{h} / 40\ \text{m/h} = 250\ \text{m}^2$$

Pour une installation selon l'invention du type de celle représentée à la figure 3 et avec un décanteur à flocs lestés autorisant une vitesse maximale au radier de 80 m/h, la surface nécessaire est constituée par la somme de la surface au radier du décanteur-épaississeur et de la surface au radier du décanteur à flocs lestés.

La surface au radier du décanteur-épaississeur est dimensionnée par rapport au flux massique soit :

$$120000\ \text{kg/j/MS} / 2000\ \text{kg/m}^2/\text{j} = 60\ \text{m}^2$$

Connaissant la vitesse au radier maximale admissible (40 m/h) sur le décanteur-épaississeur on en déduit le débit maximal admissible sur cet ouvrage, soit :

$$60\ \text{m}^2 * 40\ \text{m/h} = 2400\ \text{m}^3/\text{h}$$

Pour calculer la surface au radier nécessaire pour le décanteur à flocs lestés, on calcule le débit complémentaire à traiter sur celui-ci soit :

$$10\ 000\ \text{m}^3/\text{h} - 2400\ \text{m}^3/\text{h} + (\text{débit horaire de boues non épaissies retournant dans le}$$

décanteur-épaississeur (environ 5%)) = 8000 m$^3$/h

Connaissant la vitesse au radier maximale du décanteur à flocs lestés: 80 m/ h, on en déduit la surface au radier nécessaire, soit :

$$8000 \text{ m}^3/h/80 \text{ m/h} = 100 \text{ m}^2.$$

Dans le cadre de l'invention la surface au radier totale est donc de 60 m$^2$ + 100 m2 = 160 m$^2$ contre 250 m$^2$ pour l'installation selon l'état de la technique, soit un gain de 90 m$^2$ (36%).

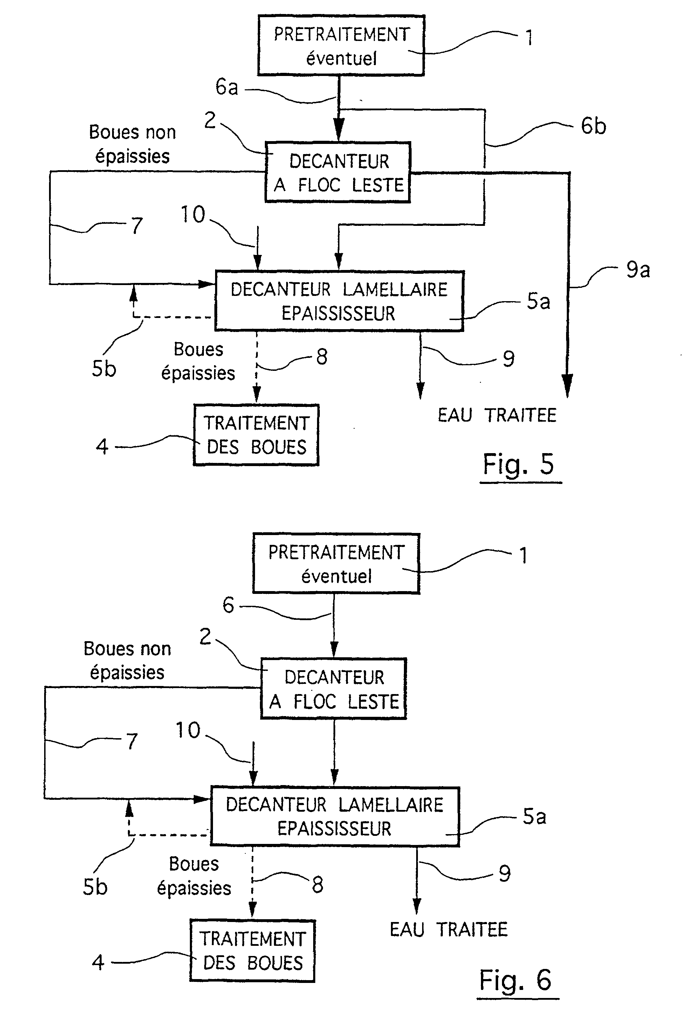

En référence aux figures 4 et 5, un deuxième mode de réalisation d'une installation selon l'invention est représentée. Cette installation comprend des moyens de prétraitement 1, un décanteur à flocs lestés 2, un décanteur-épaississeur lamellaire 5a pourvu de moyens de recirculation des boues épaissies 5b, des moyens d'amenée 6a, 6b des eaux à traiter respectivement dans le décanteur à flocs lestés 2 et dans le décanteur-épaississeur lamellaire 5a, des moyens d'acheminement 7 des boues non épaissies provenant du décanteur à flocs lestés 2 dans le décanteur-épaississeur 5a, des moyens d'évacuation des eaux traitées 9, 9a provenant respectivement des deux décanteurs 2,5a et des moyens d'évacuation 8 des boues épaissies provenant du décanteur-épaississeur 5a vers une unité de traitement de boues 4. L'installation comprend par ailleurs des moyens d'addition 10 d'au moins un réactif dans le décanteur-épaississeur 5a.

Cette installation peut être utilisée par temps sec avec des pointes des temps de pluie correspondant à un débit de 3 à 4 fois supérieur au débit de pointe de temps sec, en faisant transiter l'intégralité du débit entrant uniquement dans le décanteur-épaississeur (voir configuration selon la figure 4).

Par temps de pluie (voir configuration selon la figure 5), le décanteur-épaississeur sera utilisé pour épaissir les boues non épaissies provenant du décanteur à flocs lestés 2. Le décanteur-épaississeur sera conçu pour admettre une petite partie du débit à traiter et contribuer ainsi à une réduction des dimensions du décanteur à flocs lestés. Ce type de fonctionnement présente également l'intérêt lorsque les exigences de traitement sont peu élevées de réduire, voire supprimer, l'ajoût de réactifs en fonctionnement par temps sec.

Comme indiqué ci-dessus, le décanteur du type donnant des boues non épaissies (correspondant dans le cadre du présent mode de réalisation à un décanteur à flocs lestés 2 par un matériau granulaire) et le décanteur-épaississeur (correspondant dans le cadre du présent mode de réalisation à un décanteur-épaississeur lamellaire à recirculation de boues 5a) peuvent être alimentés en série ou en parallèle. En fonction des configurations, on jouera sur les moyens d'alimentation 6, 6a ainsi que sur les moyens d'évacuation des eaux traitées 9,9a.

La configuration représentée à la figure 6 montre une alimentation en série de ces deux décanteurs. Une telle alimentation permet d'obtenir une eau de très bonne qualité à tout moment. Cette configuration permet d'envoyer les boues non décantées dans la boucle 5b de recirculation des boues épaissies servant à la constitution et au maintien du lit de boues du décanteur-épaississeur 5a. Ceci permet d'obtenir une meilleure consistance de ce lit de boues et permet, en conséquence de travailler à des vitesses hydrauliques plus importantes tout en conservant une qualité d'eau en sortie.

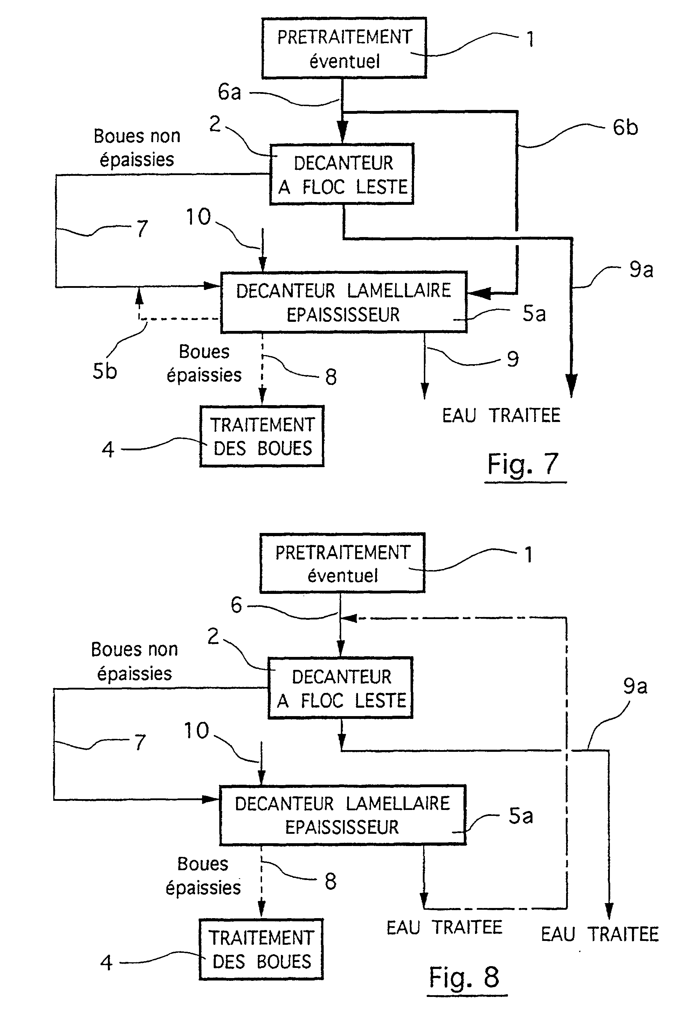

Dans le cas d'une augmentation du débit ou de la charge des eaux à traiter, les deux décanteurs 2, 5a peuvent être alimentés en parallèle selon la configuration représentée à la figure 7. Lorsque la pointe hydraulique ou massique est terminée, les deux décanteurs 2, 5a peuvent de nouveau être alimentés en parallèle.

La configuration en série pourra également être mise en oeuvre lors du démarrage de l'installation pour faciliter la constitution du lit de boues du décanteur-épaississeur 5a. Tout homme de l'art sait en effet qu'il faut un certain temps pour constituer ce lit de boue au contraire du décanteur à flocs lestés 2 qui démarre instantanément même si l'ouvrage est vide. La boue lestée non épaissie qui est envoyée dès le départ dans la boucle de recirculation 5b de la boue épaissie accélère la constitution du lit de boue. Une fois que la formation du lit de boue a eu lieu, les deux décanteurs peuvent être alimentés en parallèle.

Une autre possibilité de démarrage, montrée à la figure 8, consiste à démarrer le décanteur à flocs lestés 2 et à évacuer l'eau traitée de ce décanteur. Pendant ce temps, les boues non épaissies sont envoyées dans le décanteur lamellaire épaississeur 5a qui est utilisé seulement pour sa fonction d'épaississement. Tant que l'eau en sortie du décanteur épaississeur 5a n'est pas conforme, l'eau est retournée en tête de station pour être traitée dans le décanteur à flocs lestés 2. Dès que le décanteur-épaississeur 5a fonctionne correctement, en tant que décanteur et en tant qu'épaississeur, l'eau traitée est envoyée directement dans le milieu naturel ou au traitement situé en aval, et on passe alors à un fonctionnement en parallèle, tel que montré sur la figure 7.

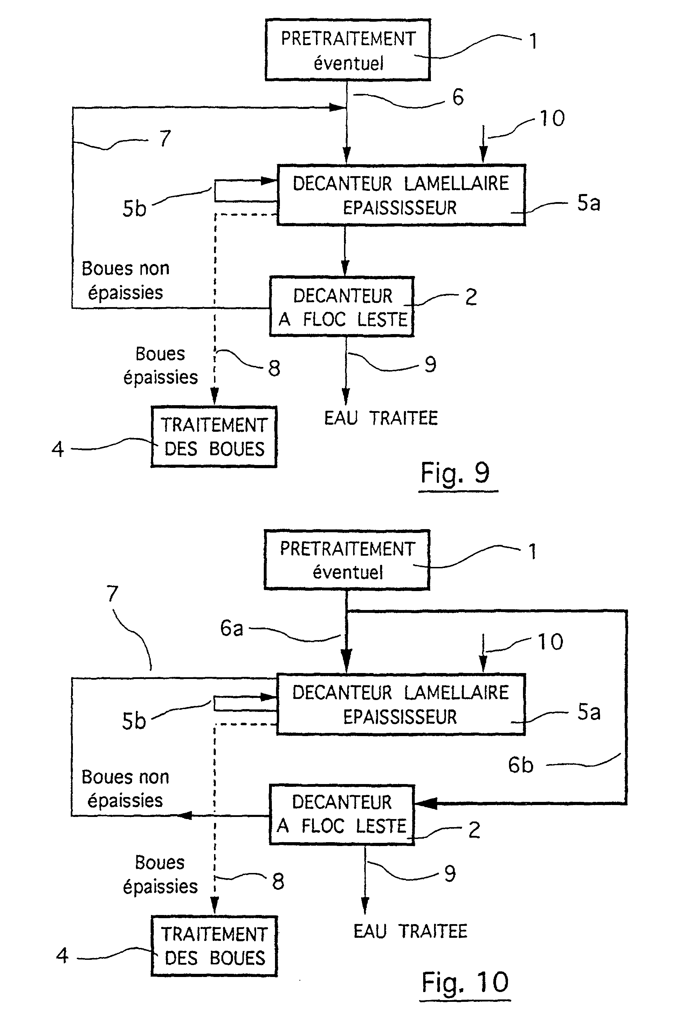

L'installation représentée aux figures 9 et 10 ne diffère de l'installation montrée aux figures 4 à 8 que par le fait que le décanteur lamellaire épaississeur 5a est monté en amont du décanteur à flocs lestés 2.

La figure 9 illustre la mise en série du décanteur lamellaire épaississeur 5a suivi du décanteur lamellaire à flocs lestés 2 dans le cas où l'on souhaite obtenir une qualité constante quel que soit le débit d'eau à traiter. Dans ce cas, le décanteur-épaississeur 5a travaillera à des vitesses hydrauliques supérieures à celles normalement requises (en pratique supérieures à 50 m/h), l'eau en sortie du décanteur-épaississeur 5a sera dégradée sans que ceci amène de perturbation dans le décanteur à flocs lestés 2. Celui-ci sert de traitement d'affinage pour éliminer les matières en suspension (MES) résiduelles et les parasites tels que notamment les oeufs d'helminthes. Dans le cas d'une pointe hydraulique ou massique, les deux décanteurs sont alimentés en parallèle selon la configuration représentée à la figure 10.

Les modes de réalisation de l'invention ici décrits n'ont pas pour objet de réduire la portée de celle-ci. Il pourra donc y être apporté de nombreuses modifications sans sortir de son cadre.

**Revendications**

1.  Procédé de traitement par voie physico-chimique des eaux **caractérisé en ce qu'**il comprend au moins une étape consistant à faire transiter les eaux à traiter dans au moins un décanteur du type donnant des boues non épaissies et dans au moins un décanteur-épaississeur, ledit décanteur-épaississeur traitant les boues des deux décanteurs et une partie des eaux à traiter.

2.  Procédé selon la revendication 1 **caractérisé en ce que** ledit décanteur du type donnant des boues non épaissies est un décanteur à flocs lestés par au moins un matériau granulaire.

3.  Procédé selon la revendication 2 **caractérisé en ce que** ledit matériau granulaire est un microsable.

4.  Procédé selon la revendication 1 ou 2 **caractérisé en ce que** ledit décanteur-épaississeur est un décanteur-épaississeur lamellaire.

5.  Procédé selon la revendication 4 **caractérisé en ce que** ledit décanteur-épaississeur lamellaire est un décanteur-épaississeur lamellaire à recirculation de boues.

6.  Procédé selon la revendication 5 **caractérisé en ce qu'**il comprend une étape consistant à mélanger lesdites boues non épaissies provenant du décanteur du type donnant des boues non épaissies aux boues recirculées du décanteur-épaississeur lamellaire à recirculation de boues.

7.  Procédé selon l'une des revendications 1 à 6 **caractérisé en ce qu'**il consiste à alimenter en parallèle ledit décanteur du type donnant des boues non épaissies et ledit décanteur-épaississeur.

8.  Procédé selon l'une des revendicaton 1 à 6 **caractérisé en ce qu'**il consiste à alimenter en série ledit décanteur du type donnant des boues non épaissies et ledit décanteur-épaississeur.

9.  Procédé selon l'une des revendication 1 à 8 **caractérisé en ce qu'**il comprend un étape supplémentaire consistant à ajouter au moins un réactif permettant d'améliorer la décantation et l'épaississement des boues dans ledit décanteur-épaississeur.

10.  Procédé selon la revendication 9 **caractérisé en ce que** l'ajout dudit réactif est effectuée en amenant ledit réactif directement dans le courant d'amenée d'eau à traiter.

11.  Procédé selon la revendication 9 **caractérisé en ce que** l'ajout dudit réactif est effectué au cours d'une étape de coagulation-floculation mise en oeuvre en amont dudit décanteur-épaississeur ou intégrée dans celui-ci.

12.  Installation pour la mise en oeuvre du procédé selon l'une des revendications 1 à 11 **caractérisée en ce qu'**elle comprend des moyens d'amenée des eaux à traiter (6), au moins un décanteur du type donnant des boues non épaissies (2), au moins un décanteur-épaississeur (5,5a), des moyens d'acheminement (7) d'au moins une partie des boues non épaissies provenant du décanteur du type donnant des boues non épaissies (2) vers le décanteur-épaississeur (5,5a), des moyens d'évacuation (9,9a) des eaux traitées provenant dudit décanteur du type donnant des boues non épaissies (2) et dudit décanteur-épaississeur (5,5a) et des moyens d'évacuation (8) des boues épaissies provenant dudit décanteur-épaississeur.

13.  Installation selon la revendication 12 **caractérisée en ce que** lesdits moyens d'amenée des eaux à traiter (6) permettent d'alimenter ledit décanteur du type donnant des boues non épaissies (2) et ledit décanteur-épaississeur (5,5a) soit en série, soit en parallèle.

14. Installation selon l'une des revendications 12 ou 13 **caractérisée en ce que** ledit décanteur du type donnant des boues non épaissies (2) est un décanteur lamellaire à flocs lestés par au moins un matériau granulaire.

15. Installation selon l'une quelconque des revendications 12 à 14 **caractérisée en ce que** ledit décanteur-épaississeur est un décanteur lamellaire (5) ou un décanteur lamellaire à recirculation de boues (5a).

16. Installation selon l'une quelconque des revendications 12 à 15 **caractérisée en ce qu'**elle comprend des moyens d'addition (10) d'au moins un réactif coagulant ou floculant dans ledit décanteur-épaississeur (5).

17. Procédé d'utilisation d'une installation selon l'une des revendications 12 à 16 **caractérisé en ce qu'**il consiste à alimenter en série ledit décanteur du type donnant des boues non épaissies (2) et ledit décanteur-épaississeur (5,5a) lors de la mise en route de l'installation et à alimenter en parallèle lesdits décanteurs une fois l'installation mise en route.

18. Procédé d'utilisation d'une installation selon l'une des revendications 12 à 16 **caractérisé en ce qu'**il consiste à alimenter en série ledit décanteur du type donnant des boues non épaissies (2) et ledit décanteur-épaississeur (5,5a) lorsque ladite installation reçoit un débit et/ou un flux normal d'eaux à traiter et **en ce qu'**il consiste à alimenter en parallèle lesdits décanteurs lors des pointes hydrauliques ou massiques.

**Patentansprüche**

1. Verfahren zur physikalisch-chemischen Abwasserreinigung, **dadurch gekennzeichnet, dass** es zumindest einen Schritt umfasst, bei dem das zu behandelnde Abwasser durch mindestens eine Dekantiereinrichtung, von der Art in der nicht eingedickter Schlamm entsteht, sowie durch mindestens eine eindickende Dekantiereinrichtung läuft, wobei die Schlämme aus beiden Dekantiereinrichtungen sowie ein Teil des zu reinigenden Abwassers in der eindickenden Dekantiereinrichtung behandelt werden.

2. Verfahren nach Anspruch 1, **dadurch gekennzeichnet, dass** es sich bei der nicht eindickenden Dekantiereinrichtung um eine Ausflockungseinrichtung handelt, in der die Flocken durch mindestens ein körniges Material gewichtet werden.

3. Verfahren nach Anspruch 2, **dadurch gekennzeichnet, dass** es sich beim körnigen Material um Mikrosand handelt.

4. Verfahren nach Anspruch 1 oder 2, **dadurch gekennzeichnet, dass** die eindickende Dekantiereinrichtung eine lamellare eindickende Dekantiereinrichtung ist.

5. Verfahren nach Anspruch 4, **dadurch gekennzeichnet, dass** die eindickende Dekantiereinrichtung den Schlamm rezirkuliert.

6. Verfahren nach Anspruch 5, **dadurch gekennzeichnet, dass** es einen Schritt umfasst, bei dem der aus der nicht eindickenden Dekantiereinrichtung kommende nicht eingedickte Schlamm mit dem aus der eindickenden Lammellen-Dekantiereinrichtung stammenden rezirkulierten Schlamm vermischt wird.

7. Verfahren nach einem der Ansprüche 1 bis 6, **dadurch gekennzeichnet, dass** die Dekantiereinrichtung in der nicht eingedickter Schlamm entsteht und die eindickende Dekantiereinrichtung parallel gespeist werden.

8. Verfahren nach einem der Ansprüche 1 bis 6, **dadurch gekennzeichnet, dass** die nicht eindickende Dekantiereinrichtung und die eindickende Dekantiereinrichtung in Serie gespeist werden.

**9.** Verfahren nach einem der Ansprüche 1 bis 8,
**dadurch gekennzeichnet, dass** es einen zusätzlichen Schritt umfasst, bei dem mindestens ein Reagens zugegeben wird, welches das Absetzen und das Eindicken des Schlamms in der eindickenden Dekantiereinrichtung verbessert.

**10.** Verfahren nach Anspruch 9,
**dadurch gekennzeichnet, dass** die Zugabe des Reagens durch Zuleiten dieses Reagens in den Zuleitungsstrom des zu behandelnden Abwassers erfolgt.

**11.** Verfahren nach Anspruch 9,
**dadurch gekennzeichnet, dass** die Zugabe des Reagens während eines Koagulierungs-Ausflockungsschrittes erfolgt, der oberhalb der eindickenden Dekantiereinrichtung angesiedelt oder innerhalb derselben integriert ist.

**12.** Anlage zur Durchführung des Verfahrens nach einem der Ansprüche 1 bis 11, **dadurch gekennzeichnet, dass** sie Zuleitungsmittel für das zu behandelnde Abwasser (6) umfasst, ferner mindestens eine Dekantiereinrichtung von der Art, in der nicht eingedickter Schlamm entsteht (2), mindestens eine eindickende Dekantiereinrichtung (5, 5a), Mittel zum Zuleiten (7) von mindestens einen Teil des nicht eingedickten Schlamms aus der nicht eindickenden Dekantiereinrichtung (2) in die eindickende Dekantiereinrichtung (5, 5a), Mittel zum Ableiten (9, 9a) des behandelten Abwassers aus der nicht eindickenden Dekantiereinrichtung (2) sowie aus der eindickenden Dekantiereinrichtung (5, 5a) und zuletzt Mittel zum Ableiten (8) des eingedickten Schlamms aus der eindickenden Dekantiereinrichtung.

**13.** Anlage nach Anspruch 12,
**dadurch gekennzeichnet, dass** die Zuleitungsmittel für das zu behandelnde Abwasser (6) das Speisen der nicht eindickenden Dekantiereinrichtung (2) sowie der eindickenden Dekantiereinrichtung (5, 5a) entweder in Serie oder parallel ermöglicht.

**14.** Anlage nach einem der Ansprüche 12 oder 13,
**dadurch gekennzeichnet, dass** es sich bei der nicht eindickenden Dekantiereinrichtung (2), um eine Lamellen-Ausflockungseinrichtung handelt, in der die Flocken durch mindestens ein körniges Material gewichtet werden.

**15.** Anlage nach einem der Ansprüche 12 bis 14,
**dadurch gekennzeichnet, dass** es sich bei der eindickenden Dekantiereinrichtung um eine Lamellen-Dekantiereinrichtung (5) bzw. um eine Lamellen-Dekantiereinrichtung mit Schlammrezirkulierung (5a) handelt.

**16.** Anlage nach einem der Ansprüche 12 bis 15,
**dadurch gekennzeichnet, dass** sie über Mittel zum Zugeben (10) von mindestens einem Koagulations- oder Ausflockungsreagens in die eindickende Dekantiereinrichtung (5) verfügt.

**17.** Verfahren zur Anwendung einer Anlage nach einem der Ansprüche 12 bis 16,
**dadurch gekennzeichnet, dass** die nicht eindickende Dekantiereinrichtung (2) und die eindickende Dekantiereinrichtung (5, 5a) beim Anfahren der Anlage in Serie gespeist werden, und dass diese Dekantiereinrichtungen danach, während des Betriebes der Anlage, parallel gespeist werden.

**18.** Verfahren zur Anwendung einer Anlage nach einem der Ansprüche 12 bis 16,
**dadurch gekennzeichnet, dass** die nicht eindickende Dekantiereinrichtung (2) und die eindickende Dekantiereinrichtung (5, 5a) in Serie gespeist werden, wenn die Anlage einen normalen Durchsatz und/oder Fluss an zu behandelndes Abwasser empfängt, während beim Auftreten von hydraulischen Spitzen oder von Massenspitzen, diese Dekantiereinrichtungen parallel gespeist werden.

**Claims**

**1.** Process for the physicochemical treatment of water, **characterized in that** it comprises at least one step consisting in making the water to be treated pass through at least one settling tank of the type producing unthickened sludge and through at least one thickening-settling tank, the said thickening-settling tank treating the sludge from the two settling tanks and some of the water to be treated.

**2.** Process according to Claim 1, **characterized in that** the said settling tank of the type producing unthickened sludge is a settling tank with floc ballasted by at least one granular material.

**3.** Process according to Claim 2, **characterized in that** the said granular material is a micro-sand.

**4.** Process according to Claim 1, **characterized in that** the said thickening-settling tank is a lamellar thickening-settling tank.

**5.** Process according to Claim 4, **characterized in that** the said lamellar thickening-settling tank is a lamellar thickening-settling tank with sludge recirculation.

**6.** Process according to Claim 5, **characterized in that** it comprises a step consisting in mixing the said unthickened sludge, obtained from the settling tank of the type producing unthickened sludge, with recirculated sludge from the lamellar thickening-settling tank with sludge recirculation.

**7.** Process according to one of Claims 1 to 6, **characterized in that** it consists in feeding the said settling tank of the type producing unthickened sludge and the said thickening-settling tank in parallel.

**8.** Process according to one of Claims 1 to 6, **characterized in that** it consists in feeding the said settling tank of the type producing unthickened sludge and the said thickening-settling tank in series.

**9.** Process according to one of Claims 1 to 8, **characterized in that** it comprises an additional step which consists in adding at least one reagent for improving the settling and thickening of the sludge in the said thickening-settling tank.

**10.** Process according to Claim 9, **characterized in that** the said reagent is added by introducing it directly into the influent water to be treated.

**11.** Process according to Claim 9, **characterized in that** the said reagent is added during a coagulation-flocculation step carried out upstream of the said thickening-settling tank or included in it.

**12.** Plant for carrying out the process according to one of Claims 1 to 11, **characterized in that** it comprises means (6) for conveying the water to be treated, at least one settling tank of the type producing unthickened sludge (2), at least one thickening-settling tank (5, 5a), means (7) for conveying at least some of the unthickened sludge obtained from the settling tank of the type producing unthickened sludge (2) to the thickening-settling tank (5, 5a), means (9, 9a) for removing the treated water obtained from the said settling tank of the type producing unthickened sludge (2) and from the said thickening-settling tank (5, 5a) and means (8) for removing the thickened sludge obtained from the said thickening-settling tank.

**13.** Plant according to Claim 12, **characterized in that** the said means (6) for conveying the water to be treated can feed the said settling tank of the type producing unthickened sludge (2) and the said thickening-settling tank (5, 5a) either in series or in parallel.

**14.** Plant according to either of Claims 12 and 13, **characterized in that** the said settling tank of the type producing unthickened sludge (2) is a lamellar settling tank with floc ballasted by at least one granular material.

**15.** Plant according to any one of Claims 12 to 14, **characterized in that** the said thickening-settling tank is a lamellar settling tank (5) or a lamellar settling tank with sludge recirculation (5a).

**16.** Plant according to any one of Claims 12 to 15, **characterized in that** it comprises means (10) for adding at least one coagulating or flocculating reagent to the said thickening-settling tank (5).

**17.** Process for using a plant according to any one of Claims 12 to 16, **characterized in that** it consists in feeding the said settling tank of the type producing unthickened sludge (2) and the said thickening-settling tank (5, 5a) in series when the plant is being started up, and in feeding the said settling tanks in parallel once the plant has been started up.

**18.** Process for using a plant according to one of Claims 12 to 16, **characterized in that** it consists in feeding the said settling tank of the type producing unthickened sludge (2) and the said thickening-settling tank (5, 5a) in series when the said plant receives a normal flow and/or inlet of water to be treated, and **in that** it consists in feeding the said settling tanks in parallel during peak water or material flows.

## Fig. 1

## Fig. 2

**Fig. 3**

**Fig. 4**

PRETRAITEMENT
éventuel — 1

6a

Boues non
épaissies

2

DECANTEUR
A FLOC LESTE — 6b

7

10

DECANTEUR LAMELLAIRE
EPAISSISSEUR — 5a

9a

5b

Boues
épaissies — 8

9

TRAITEMENT
DES BOUES

4

EAU TRAITEE

__Fig. 5__

PRETRAITEMENT
éventuel — 1

6

Boues non
épaissies

2

DECANTEUR
A FLOC LESTE

7

10

DECANTEUR LAMELLAIRE
EPAISSISSEUR — 5a

5b

Boues
épaissies — 8

9

TRAITEMENT
DES BOUES

4

EAU TRAITEE

__Fig. 6__

Fig. 7

Fig. 8

Fig. 9

Fig. 10